(19) Europäisches Patentamt
European Patent Office
Office européen des brevets

(11) EP 2 803 960 A1

(12) EUROPÄISCHE PATENTANMELDUNG

(43) Veröffentlichungstag:
19.11.2014  Patentblatt 2014/47

(51) Int Cl.:
G01J 3/42 (2006.01)          G01J 3/433 (2006.01)
G01J 3/02 (2006.01)

(21) Anmeldenummer: 13167488.9

(22) Anmeldetag: 13.05.2013

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: Philipps Universität Marburg
35037 Marburg (DE)

(72) Erfinder:
• Busch, Stefan
  35037 Marburg (DE)

• Koch, Martin
  35037 Marburg (DE)
• Probst, Thorsten
  35037 Marburg (DE)
• Schwerdtfeger, Michael
  38337 Remlingen (DE)

(74) Vertreter: Stumpf, Peter
c/o TransMIT GmbH
Kerkrader Strasse 3
35394 Gießen (DE)

(54) **Verfahren zur Signalanalyse und mit einem Transceiver ausgestattetes THz-Zeitbereichsspektrometer zu seiner Anwendung**

(57)     Gegenstand der Erfindung ist ein Signalanalyseverfahren für die THz-Zeitbereichsspektroskopie, das eine Amplitudenmodulation einer Folge von Anrege- und einer Folge von Abfragepulsen mit unterschiedlichen Modulationsfrequenzen beinhaltet. Ein weiterer Gegenstand der Erfindung ist ein mit einem Transceiver ausgestattetes THz-Zeitbereichsspektrometer mit 0°-Reflexionsgeometrie, das unter Anwendung des erfindungsgemäßen Signalanalyseverfahrens die Extraktion eines THz-Signals im Zeitbereich aus einem mehrere Größenordnungen höheren Grundsignal gestattet.

Fig. 2

EP 2 803 960 A1

**Beschreibung**

**Gebiet der Erfindung**

Die Erfindung betrifft ein Verfahren zur Signalanalyse für die THz-Zeitbereichsspektroskopie (Terahertz Time Domain Spectroscopy - THz-TDS) sowie ein mit einem Transceiver ausgestattetes THz-Zeitbereichsspektrometer mit 0°-Reflexionsgeometrie, das zur Anwendung dieses Verfahrens geeignet ist.

Begriffsbestimmung

Der Begriff Transceiver ist eine Kombination aus Transmitter (Sender, Quelle) und Receiver (Empfänger, Detektor). Er bezeichnet eine Baugruppe, in der die Funktionen Senden und Empfangen vereinigt sind. Allerdings sind die in der Literatur verwendeten Definitionen eines Transceivers nicht eindeutig, sodass an dieser Stelle eine Begriffsbestimmung erfolgen muss.

Im Rahmen dieser Patentanmeldung wird unter einem Transceiver eine Baugruppe verstanden, die nur eine einzige Antenne aufweist, welche sowohl als Sender als auch als Empfänger fungiert.

Abweichend von dieser Definition werden in der Literatur auch Baugruppen, die zwei Antennen (eine Sender- und eine Empfängerantenne) aufweisen, als Transceiver bezeichnet, wenn beide Antennen unmittelbar benachbart angeordnet und somit in Form einer kompakten Sonde ausführbar sind.

Solche Anordnungen mit zwei Antennen werden in dieser Anmeldung nachfolgend als Pseudo-Transceiver bezeichnet, da sie der obigen Definition eines Transceivers (nur eine Antenne) nicht entsprechen.

Die hier gegebene Abgrenzung zwischen Transceiver und Pseudo-Transceiver ist prinzipiell in beliebigen Frequenzbereichen des elektromagnetischen Spektrums anwendbar und zudem auf mechanische Wellen (z. B. Ultraschall) übertragbar. Entsprechend dem Gebiet der Erfindung, der THz-Spektroskopie, handelt es sich bei den nachfolgend beschriebenen Transceivern und Pseudo-Transceivern aber stets um solche, die im THz-Bereich (hier definiert als Frequenzbereich zwischen 30 GHz und 10 THz) oder zumindest in einem Teilbereich desselben einsetzbar sind. Das erfindungsgemäße Signalanalyseverfahren ist aber auch in einem über diesen Bereich hinaus erweiterten Frequenzbereich einsetzbar.

Neben der Antenneneinheit (mit einer bzw. zwei Antennen) weisen sowohl Transceiver als auch Pseudo-Transceiver einen Modulator, eine elektronische Schaltung sowie die notwendigen elektrischen Verbindungen auf. Eine unverzichtbare Komponente der elektronischen Schaltung für Transceiver ist ein schmalbandiges Filter, vorzugsweise ein Lock-in-Verstärker. Pseudo-Transceiver müssen nicht zwingend ein solches Filter aufweisen, zwecks Verbesserung der Signalqualität werden aber auch sie in der Regel damit ausgestattet.

Bei den in dieser Patentanmeldung beschriebenen Transceivern handelt es sich stets um für den THz-Bereich geeignete Transceiver (THz-Transceiver). Sie werden nachfolgend jedoch stets kurz als Transceiver bezeichnet.

Anforderungen an THz-Systeme beim Einsatz in der Praxis

Es besteht ein wachsendes Interesse, THz-Strahlung zur Inline-Kontrolle industrieller Prozesse und auch für medizinische Zwecke einzusetzen.

Eine Anwendung in industriellen Prozessen ist z. B. die Qualitätskontrolle von Rohmaterialien, deren gleichbleibende Zusammensetzung mithilfe der THz-Spektroskopie überprüft werden kann.

Mithilfe bildgebender Verfahren wie z. B. der THz-Mikroskopie können Produktionsfehler in der Serienfertigung, z. B. Delaminationen bei Schichtstrukturen, unmittelbar erkannt und die fehlerhaften Komponenten sofort ausgesondert werden. In der Medizin wird THz-Strahlung zur Unterscheidung von krankem und gesundem Gewebe eingesetzt, wobei insbesondere auch endoskopische Untersuchungen erwünscht sind.

In vielen Anwendungsfällen sind aufgrund der besonderen Eigenschaften der THz-Strahlung (starke Absorption in Wasser, starke Reflexion an metallischen Oberflächen) keine Untersuchungen in Transmission möglich, sodass auf Messanordnungen mit Reflexionsgeometrie zurückgegriffen werden muss. Diese sollten so klein und kompakt gestaltet sein, dass ihre räumlichen Abmessungen den Einsatz bei der Prozesskontrolle nicht einschränken. Zudem sollten die Sonden zur Emission und Detektion von THz-Strahlung leicht und weitgehend frei beweglich ausgeführt sein, wodurch Stichproben an verschiedenen Orten und endoskopische Untersuchungen erst möglich werden.

Da die Abmessungen der Messanordnungen vor allem durch den Abstand zwischen THz-Sender und THz-Empfänger bestimmt sind, ist es wünschenswert, THz-Sender und THz-Empfänger auf engstem Raum in einer Sonde zu vereinigen und idealerweise sogar Sender- und Empfängerfunktion mit einer einzigen, in der Sonde untergebrachten, Antenne zu realisieren, die Sonde also gemäß der obigen Begriffsbestimmung als Transceiver auszuführen. Die zugehörige Messanordnung ist durch eine 0°-Reflexionsgeometrie gekennzeichnet, bei der sich das emittierte und das detektierte THz-Signal gegenläufig auf demselben optischen Pfad bewegen. Neben der Möglichkeit, die Sonde sehr kompakt und schlank auszuführen, ist durch den Verzicht auf die zweite Antenne auch eine erhebliche Reduktion der Systemkosten erreichbar.

Die wichtigste Besonderheit der Strahlführung bei einem Transceiver, die seinen praktischen Einsatz bisher limitiert, besteht darin, dass die Emission des auf die zu untersuchende Probe gerichteten THz-Signals und die Detektion des von der Probe reflektierten, weitaus schwächeren, THz-Signals am gleichen Ort (an der den Transceiver bildenden Antenne) erfolgt, sodass sich beide THz-Signale überlagern und zuverlässig getrennt werden müssen. Für diese Signalanalyse sind geeignete Verfahren zur Signalmodulation und die zugehörigen Modulatoren erforderlich.

Wie der nachfolgend dargestellte Stand der Technik zeigt, sind sowohl die Verfahren zur Signalmodulation als auch die zugehörigen Modulatoren für die Analyse sehr schwacher THz-Signale noch unzureichend, sodass hier ein dringender Bedarf an innovativen Lösungen besteht.

**Stand der Technik**

Ein Transceiver für den THz-Frequenzbereich wird in der Patentschrift US 6844552B2 (Zhang et al., erteilt am 18.01.2005) beschrieben. Die Anordnung umfasst die aus dem Stand der Technik bekannten Baugruppen eines THz-Spektrometers: einen Femtosekundenlaser (fs-Laser), der eine Folge kurzer Infrarot-Pulse liefert, und einen Strahlteiler mit Verzögerungseinheit, der die vom fs-Laser gelieferten Infrarot-Pulse jeweils in einen Anrege- und einen Abfragepuls teilt und den Abfragepuls um eine definierte, durchstimmbare Zeitspanne gegenüber dem Anregepuls verzögert. Im Gegensatz zur herkömmlichen Transmissionsgeometrie mit zwei Antennen treffen beide Pulsfolgen auf einen Transceiver, z. B. eine mit einer Bias-Gleichspannungsquelle verbundene photoleitende Antenne, die bei Einwirken eines Anregepulses ein THz-Feld emittiert und bei Einwirken des zugehörigen, zeitverzögerten Abfragepulses das (z. B. an einer Probe) reflektierte, momentane THz-Feld detektiert. Das THz-Feld erfährt eine Amplitudenmodulation durch einen im THz-Strahlengang angeordneten mechanischen Modulator (Chopper), wobei die maximal erreichbare Modulationsfrequenz im Bereich 1-2 kHz liegt.

In Fig. 4 der US 6844552 B2 werden die Nachteile dieser Anordnung offensichtlich: Wegen des im THz-Strahlengang angeordneten mechanischen Modulators kann der Transceiver der Probe nicht beliebig dicht angenähert werden. Es ist eine, ebenfalls im THz-Strahlengang angeordnete, THz-Optik erforderlich, die die vom Transceiver emittierte THz-Strahlung auf die Probe und die von dieser reflektierte THz-Strahlung zurück zum Transceiver lenkt. Aufgrund der Positionierung des mechanischen Modulators und der THz-Optik zwischen dem Transceiver und der Probe wird die Anordnung voluminös, sperrig und unflexibel. Anwendungen, die einen beliebig kleinen Abstand zwischen Transceiver und Probe erfordern, wie z. B. die Endoskopie, sind prinzipiell nicht realisierbar. Zudem sind die mit dem mechanischen Modulator erreichbaren Modulationsfrequenzen auf Maximalwerte im Bereich weniger kHz begrenzt, was zu einer niedrigen Messgeschwindigkeit führt. Zur Überwindung dieser Nachteile werden alternative Verfahren benötigt, bei denen die Signalmodulation nicht im THz-Strahlengang erfolgt.

Y. B. Ji et al. (Optics Express 17 (2009) 17082) beschreiben eine als Sender und Empfänger für THz-Strahlung geeignete Sonde, die die genannten Nachteile überwindet und insbesondere für die Endoskopie geeignet ist.

Die Sonde weist zwei unmittelbar benachbarte photoleitende Antennen auf, die als Sender (Generator) bzw. Empfänger (Detektor) wirken. Die Antennen sind in Gehäusen mit einem Querschnitt von jeweils 4 mm x 6 mm untergebracht, die an der längeren Seite miteinander verbunden sind, sodass das Endoskop einen Querschnitt von 8 mm x 6 mm erhält. Beide Antennen sind jeweils über eine optische Faser mit einem Strahlführungssystem verbunden.

Die Modulation erfolgt bei dieser Lösung durch das Anlegen einer Wechselspannung (90 $V_{ac}$, 500 Hz) an die Senderantenne. Es wird also ein elektronisches Modulationsverfahren genutzt, bei dem die Amplitude der Folge der Anregepulse mit einer ausgewählten Modulationsfrequenz moduliert wird.

Bei dieser Lösung handelt es sich zwar um eine sehr kompakte Sonde, die aber zwei, wenn auch unmittelbar benachbarte, Antennen benötigt. Es handelt sich also im Sinne der obigen Begriffsbestimmung nicht um einen Transceiver, sondern um einen Pseudo-Transceiver. Durch die Kombination von Sender- und Empfängerfunktion in einem Transceiver (mit einer Antenne) könnte der Querschnitt der Sonde auf 4 mm x 6 mm halbiert und so der Einsatzbereich des Endoskops auf noch kleinere Hohlräume im menschlichen Körper erweitert werden.

Es gibt bisher keine aussichtsreichen Ansätze zur Weiterentwicklung der bekannten Signalmodulationsverfahren mit dem Ziel, die Empfindlichkeit der vorhandenen THz-Messeinrichtungen noch weiter zu steigern und somit auch extrem schwache THz-Signale aus einem mehrere Größenordnungen höheren Grundsignal extrahieren zu können. Insbesondere fehlt ein geeignetes Signalmodulationsverfahren für THz-Zeitbereichsspektrometer, die in 0°-Reflexbnsgeometrie (senkrechter Einfall auf die Probe) arbeiten und zwingend einen Transceiver benötigen. Ein für ein solches Reflexionsspektrometer mit Transceiver geeignetes Signalmodulationsverfahren würde 0°-Reflexionsmessungen (senkrechterEinfall) mit einer miniaturisierten, nahezu frei beweglichen THz-Sonde erlauben und wäre damit für die Inline-Prozesskontrolle an schwer zugänglichen Orten und für endoskopische Untersuchungen ideal geeignet.

## Aufgabe der Erfindung

Aufgabe der Erfindung ist es daher, ein Signalmodulationsverfahren für THz-Messeinrichtungen bereitzustellen, das es erlaubt, deren Empfindlichkeit deutlich zu erhöhen und somit auch extrem schwache THz-Signale noch quantitativ analysieren zu können. Insbesondere soll es ermöglicht werden, ein THz-Signal aus einem mehrere Größenordnungen höheren Grundsignal zu extrahieren. Das Signalmodulationsverfahren soll insbesondere für ein mit einem Transceiver ausgestattetes THz-Zeitbereichsspektrometer mit 0°-Reflexionsgeometrie (d. h. senkrechtem Strahleinfall) einsetzbar sein, bei dem sich emittierter und reflektierter THz-Strahl gegenläufig auf demselben Pfad bewegen.

Weiterhin ist es Aufgabe der Erfindung, ein solches mit einem Transceiver ausgestattetes THz-Zeitbereichsspektrometer mit 0°-Reflexionsgeometrie bereitzustellen, welches das erfindungsgemäße Signalmodulationsverfahren bei der Signalanalyse zur Anwendung bringt.

## Zusammenfassung der Lösung

Erfindungsgemäß wird die Aufgabe gelöst durch das ein neuartiges Signalmodulationsverfahren umfassende Signalanalyseverfahren nach Anspruch 1 und 2. Ferner wird die Aufgabe gelöst durch die Bereitstellung eines Modulationssystems nach den Ansprüchen 3 bis 5 und eines mit einem Transceiver ausgestatteten THz-Zeitbereichsspektrometers mit 0°-Reflexionsgeometrie nach den Ansprüchen 6 bis 12 (nachfolgend kurz THz-Spektrometer), das zur Anwendung des erfindungsgemäßen Signalmodulationsverfahrens geeignet ist.

Wesentliches Merkmal des erfindungsgemäßen Signalmodulationsverfahrens ist es, dass die Signalmodulation im optischen Teil des THz-Spektrometers erfolgt, wobei sowohl die Folge der Anregepulse als auch die Folge der Abfragepulse mit unterschiedlichen Modulationsfrequenzen moduliert werden. Wesentliches Merkmal des Signalanalyseverfahrens ist es, dass das zu messende THz-Signal bei den aus den beiden Modulationsfrequenzen erzeugten Mischfrequenzen auftritt und somit zuverlässig aus dem totalen Signal im Frequenzbereich zu extrahieren ist.

## Detaillierte Darstellung der Lösung

Um das Verständnis der nachfolgenden Abschnitte zu erleichtern, sei hier zunächst eine Liste der verwendeten Formelzeichen gegeben:

$C$ [fF] - Kapazität einer photoleitenden Antenne (in Femtofarad)

$\Delta T$ - Dauer eines Femtosekunden-Laserpulses (fs-Laserpulses)

$\Delta t$ - Verzögerungszeit eines Abfragepulses gegenüber dem zugehörigen Anregepuls

$E_{THz}(t)$ - Betrag der elektrischen Feldstärke eines mit $f_S$ modulierten THz-Pulses als Funktion der Zeit t

$E_{THz,0}$ Amplitude von $E_{THz}(t)$

$f_{rep}$ - Repetitionsrate des fs-Lasers

$f_E$ - Modulationsfrequenz der Abfragepulse

$f_S$ - Modulationsfrequenz der Anregepulse

$I$ - Gesamtstrom an der photoleitenden Antenne

$I_E$ - durch den Abfragepuls bedingte Komponente von $I$

$I_S$ - durch den Anregepuls bedingte Komponente von $I$

$I_{THz}$ - durch den THz-Puls bedingte Komponente von $I$

$j(t)$ - Stromdichte der Elektronen

$L$ - Dipollänge (Abstand zweier Streifenleiter, welche die Elektroden einer photoleitenden Antenne bilden)

$L_{gap}$ - Abstand der Elektrodenspitzen einer photoleitenden Antenne

$P_{E,0}^{\mathrm{Laser}}$ - Leistung eines vom fs-Laser gelieferten Abfragepulses

$P_{S,0}^{\mathrm{Laser}}$ - Leistung eines vom fs-Laser gelieferten Anregepulses

$P_E^{\mathrm{Laser}}$ - Leistung eines Abfragepulses nach erfolgter Modulation

$P_S^{\mathrm{Laser}}$ - Leistung eines Anregepulses nach erfolgter Modulation

$R(t)$ - Zeitabhängiger elektrischer Widerstand der Antenne

$R_E$ - Widerstand der Antenne beim Auftreffen der Anregepulsfolge

$R_S$ - Widerstand der Antenne beim Auftreffen der Abfragepulsfolge

$R_{load}$   - Lastwiderstand

$s$   - Dicke des Halbleitersubstrats

$t$   - Zeit

$U$   - zum Gesamtstrom $I$ proportionales Spannungssignal

$U_0$   - Bias-Gleichspannung

$U_{THz}(t)$   - vom mit $f_S$ modulierten THz-Feld induzierte Spannung an der Antenne

$U_{THz,0}$   Amplitude von $U_{THz}(t)$

$W$ [pJ]   - im Kondensator mit der Kapazität C speicherbare Energie (angegeben in Pikojoule)

$\xi$   - Konversionsfaktor (Laserleistung in Ladungsträger)

$\rho_{gap}$   - spezifischer Widerstand im Bereich der von den Elektrodenspitzen gebildeten Lücke

Um die Vorteile der erfinderischen Lösung, sowohl die Folge der Anregepulse als auch die Folge der Abfragepulse mit unterschiedlichen Modulationsfrequenzen zu modulieren, zu verdeutlichen, ist es notwendig, zunächst das bei den bekannten THz-Zeitbereichsspektrometern angewendete Messprinzip zu erläutern.

THz-Zeitbereichsspektrometer clemäß dem Stand der Technik

Ein mit einer Repetitionsrate $f_{rep}$ von typischerweise 70 MHz bis 250 MHz arbeitender fs-Laser versorgt das THz-Zeitbereichsspektrometer mit einer Folge extrem kurzer Laserpulse, deren Wellenlänge auf einen Wert im Bereich von 600 nm bis 1600 nm, vorzugsweise im nahen IR-Bereich von 780 nm bis 1550 nm, eingestellt wird. Die Pulsdauer $\Delta T$ liegt im Bereich von 1 fs bis 1 ps, vorzugsweise im Bereich 30 fs bis 100 fs.

Jeder Puls dieser Pulsfolge wird mittels eines Strahlteilers in einen Anregepuls und einen Abfragepuls aufgeteilt, sodass eine Folge von Anregepulsen und eine Folge von Abfragepulsen entstehen. Eine der Pulsfolgen wird über eine Verzögerungsstrecke geleitet, bei der durch Veränderung der optischen Weglänge eine im Bereich von wenigen Femtosekunden bis zu einer Nanosekunde durchstimmbare zeitliche Verzögerung zwischen beiden Pulsfolgen realisiert wird. Jedem Puls der Folge der Anregepulse ist also genau ein Puls der Folge der Abfragepulse zugeordnet. Zwei solche geringfügig zeitversetzte Pulse bilden ein Pulspaar, welches vom nächstfolgenden Pulspaar durch eine wesentlich längere Zeitspanne (Größenordnung 10 ns) getrennt ist.

Das THz-Zeitbereichsspektrometer ist mit einem THz-Emitter und einem THz-Detektor ausgestattet, die räumlich voneinander getrennt sind. Sie können z. B. als photoleitende Antennen oder als elektrooptische Kristalle ausgeführt sein. Die nachfolgende Erläuterung beschränkt sich auf die erstgenannte Ausführungsform. Diese Anordnung ermöglicht Untersuchungen in Transmission, wobei die Probe zwischen THz-Emitter und einem THz-Detektor angeordnet wird, aber auch Untersuchungen in Reflexion bei schrägem Einfall, wobei die vom Emitter ausgehende THz-Strahlung von der Probenoberfläche zum Detektor reflektiert wird.

Die Weglängen der beiden Pulsfolgen im Spektrometer sind so gewählt, dass zunächst stets der Anregepuls die als THz-Emitter wirkende Senderantenne erreicht. Der zugehörige Abfragepuls erreicht die als THz-Detektor wirkende Empfängerantenne erst nach einer definierten, durchstimmbaren Verzögerungszeit.

Wesentlich ist die unterschiedliche Beschaltung der beiden photoleitenden Antennen. An der Senderantenne liegt eine externe Bias-Gleichspannung $U_0$ an, deren Wert typischerweise zwischen 1 V und 100 V gewählt wird. An der Empfängerantenne liegt keinerlei Bias-Spannung an, stattdessen ist sie mit einer empfindlichen Vorrichtung zur Strommessung, vorzugsweise einem Transimpedanz-Verstärker mit einem nachgeschalteten Lock-in-Verstärker, verbunden. Beide Antennen sind grundsätzlich inaktiv, nur bei Einwirkung eines der extrem kurzen, intensiven Laserpulse werden Ladungsträger generiert und die Antennenfunktion wird kurzzeitig eingeschaltet.

*Vorgänge an der Senderantenne*

Im ausgeschalteten Zustand nimmt die Senderantenne den Zustand eines geladenen Kondensators mit einer Kapazität C von einigen fF an und speichert elektrostatisch die Energie $W = \frac{1}{2} C U_0,$ die typischerweise im Bereich weniger pJ liegt. Beim Auftreffen eines Anregepulses werden freie Ladungsträger (Elektronen und aufgrund ihrer geringen Beweglichkeit vernachlässigbare Löcher) erzeugt und im durch die Bias-Spannung erzeugten elektrischen Feld beschleunigt, wobei sie einen THz-Puls abstrahlen. Die gespeicherte Energie W wird dabei in kinetische Energie der Elektronen und THz-Strahlung umgewandelt.

Aufgrund der kurzzeitig extrem hohen Ladungsträgerdichte infolge des kurzen, intensiven Laserpulses wird der Kondensator mit der Kapazität C abrupt vollständig entladen. Zudem wird ein Halbleitermaterial mit extrem kurzer Ladungsträgerlebensdauer gewählt (z. B. low-temperature-grown GaAs). Diese Randbedingungen bewirken, dass der durch die beschleunigten photoelektrisch erzeugten Ladungsträger hervorgerufene Strompuls eine sehr kurze Dauer in der Größenordnung von einigen ps aufweist. Der gemäß den Maxwellschen Gleichungen abgestrahlte THz-Puls hat ebenfalls diese kurze Dauer und daher eine sehr hohe Bandbreite. Der Betrag seiner Feldstärke $E_{\mathrm{THz}}$ ist proportional zur zeitlichen Änderung der Stromdichte $j(t)$ der Elektronen: $E_{\mathrm{THz}}(t) \propto \dfrac{\partial j(t)}{\partial t}$.

Die Maximalwerte der Stromdichte $j(t)$ und damit der Feldstärke $E_{\mathrm{THz}}$ des emittierten THz-Pulses werden durch die Bias-Spannung $U_0$, die optische Leistung des fs-Lasers, das Halbleitermaterial und die Antennenstruktur bestimmt.

*Vorgänge an der Empfängerantenne*

Die Folge der zeitlich verzögerten Abfragepulse wird auf die Empfängerantenne geleitet. Durch eine genaue Anpassung der Weglängen im Spektrometer wird gewährleistet, dass gleichzeitig mit dem Eintreffen eines Abfragepulses auch der zugehörige von der Senderantenne emittierte THz-Puls, der bereits die Messstrecke durchlaufen und dabei die Probe durchdrungen (transmittiert) hat (bzw. an der Probenoberfläche reflektiert wurde) an der Empfängerantenne eintrifft. Der THz-Puls enthält die spektrale Information über die Probe, die nunmehr zu extrahieren ist. Dazu ist die Empfängerantenne, an der keine Bias-Spannung anliegt, mit einer empfindlichen Vorrichtung zur Strommessung, vorzugsweise einem Transimpedanz-Verstärker mit einem nachgeschalteten Lock-in-Verstärker, verbunden.

Der vom fs-Laser gelieferte Abfragepuls ist - verglichen mit der Dauer des THz-Pulses von einigen ps - kurz. Der Abfragepuls schaltet die Antenne für einige Femtosekunden leitend, sodass das momentane elektrische Feld des THz-Pulses in diesem Zeitraum Ladungsträger beschleunigt und einen Stromfluss in der Antenne induziert. Somit wird mit einem Abfragepuls nur ein kurzer Abschnitt des THz-Pulses gemessen. Die vom Abfragepuls erzeugten Ladungsträger folgen dem momentanen elektrischen Feld des THz-Pulses und liefern ein elektrisches Stromsignal, das mithilfe der zwischen den Antennenkontakten angeordneten Vorrichtung zur Strommessung gemessen wird. Da keine Bias-Spannung, also kein äußeres elektrisches Feld, anliegt, wird dieses Stromsignal maßgeblich durch das einlaufende THz-Feld bestimmt. Solange die Verzögerungsstrecke unverändert bleibt, bleibt auch die Verzögerungszeit $\Delta t$ des Abfragepulses gegenüber dem Anregepuls gleich. Es wird also stets das Feld $E_{\mathrm{THz}}(\Delta t)$ desselben Abschnitts des THz-Pulses gemessen. Eine mit der Empfängerantenne verbundene Schaltung mit Tiefpasscharakteristik bewirkt, dass anstelle eines Signals mit der Repetitionsrate $f_{\mathrm{rep}}$ der Laserpulse ein gemitteltes Gleichstromsignal gemessen wird.

Durch schrittweise Änderung der Länge der Verzögerungsstrecke wird die Verzögerungszeit $\Delta t$ durchgestimmt und auf diese Art und Weise ein Strommesswert für jede Position $\Delta t$ des THz-Pulses im Zeitbereich ermittelt, die Wellenform des vollständigen THz-Pulses wird also abgetastet (Sampling-Verfahren).

Der Strom, der an der Antenne gemessen werden kann, ergibt sich aus $I$ wobei U die Spannung über der Antenne ist, die zum Zeitpunkt des Eintreffens des Abfragepulses durch das elektrische Feld $E_{\mathrm{THz}}(\Delta t)$ induziert wird. Bei einer Antenne mit der Dipollänge L ergibt sich $U(\Delta t) = E_{\mathrm{THz}}(\Delta t).\ L$.

Der Widerstand R ist abhängig von der Leistung $P_{\mathrm{E},0}^{\mathrm{Laser}}$ des Laserstrahls auf der Antenne und ist gegeben durch $R = \dfrac{L_{\mathrm{gap}} \cdot \rho_{\mathrm{gap}}}{s \cdot d}$, wobei $L_{\mathrm{gap}}$ die Breite der Lücke der Antenne (d. h. der Abstand der Elektrodenspitzen) ist, $s$ die Dicke des Halbleitersubstrats und $d$ die Breite der Elektrodenspitzen, die die Lücke der Antenne bilden. Der spezifische Widerstand $\rho_{\mathrm{gap}}$ im Bereich dieser Lücke hängt von der Leistung des Lasers ab: $\rho_{\mathrm{gap}} = \dfrac{L_{\mathrm{gap}} \cdot d}{\xi \cdot P_{\mathrm{E},0}^{\mathrm{Laser}}}$ und bestimmt den Widerstand der gesamten Antenne. Dabei ist $\xi$ ein Konversionsfaktor, der den Zusammenhang zwischen der Laserleistung und der Anzahl der photoelektrisch generierten Ladungsträger beschreibt.

Es ergibt sich also $R = \dfrac{L_{\mathrm{gap}}^{\,2}}{s \cdot \xi \cdot P_{\mathrm{E},0}^{\mathrm{Laser}}}$ und somit (bei Einwirken der Abfragepulsfolge) der Strom an der Empfängerantenne zu $I(\Delta t) = E_{\mathrm{THz}}(\Delta t) \cdot L \cdot s \cdot \xi \cdot P_{\mathrm{E},0}^{\mathrm{Laser}} / L_{\mathrm{gap}}^{\,2}$. Diese Formel bestätigt die oben getroffene wesentliche Feststellung, dass der Messwert des Stroms ausschließlich vom Momentanwert des einlaufenden THz-Feldes abhängt.

Für eine ausführliche Darstellung der Vorgänge an Sender- und Empfängerantenne sei hier verwiesen auf:

Jepsen, P. U., Jacobsen, R. H., Keiding, S. R. (1996): Generation and detection of terahertz pulses from biased semiconductor antennas. Journal of the Optical Society of America B, 13 (11), 2424. doi:10.1364/JOSAB.13.002424

Die im Stand der Technik beschriebenen Vorrichtungen erlauben es, den Stromverlauf $I(\Delta t)$ zu messen. Zur Erhöhung des Signal-Rausch-Verhältnisses wird dabei vorzugsweise das gemessene Gleichstromsignal mit einer Frequenz im Bereich von einigen 10 Hz bis zu einigen kHz (bei mechanischer Modulation) und bis zu einigen MHz (bei elektrooptischer Modulation) moduliert und mittels Lock-in-Technik ausgewertet.

Die bekannten Modulationsverfahren lassen sich jedoch nicht anwenden bei miniaturisierten Transceivern, bei denen Modulatoren im THz-Strahlengang unzulässig sind.

Nachfolgend wird daher ein Modulationsverfahren angegeben, das eine mechanische oder elektrooptische Modulation mit hohen Modulationsfrequenzen im optischen Zweig eines THz-Zeitbereichsspektrometers zulässt und insbesondere geeignet ist für die Anwendung bei THz-Zeitbereichsspektrometern mit 0°-Reflexionsgeometrie, die mit einer miniaturisierten Transceiver-Anordnung ausgestattet sind.

Erfindungsgemäßes Modulationsverfahren für ein mit einem Transceiver ausgestattetes THz-Zeitbereichsspektrometer mit 0°-Reflexionsgeometrie

Wie bereits dargestellt, ist ein Transceiver eine einzelne photoleitende Antenne, die sowohl als Senderantenne als auch als Empfängerantenne wirkt. Anrege- und Abfragepulse treffen alternierend auf die Antenne und schalten die Antennenfunktion kurzzeitig ein. Damit der Transceiver als Senderantenne fungieren kann, muss er mit einer Bias-Spannung $U_0$ belegt werden, die beim Auftreffen eines Anregepulses einen unipolaren Strompuls im mA-Bereich hervorruft, der, wie oben beschrieben, gemäß den Maxwellschen Gleichungen mit der Aussendung eines THz-Pulses verbunden ist.

Diese Bias-Gleichspannung liegt im Bereich 1 V bis 100 V, bevorzugt im Bereich 10 V bis 40 V. Unvermeidlich wirkt sie auch beim Auftreffen eines Abfragepulses, sodass auch hier ein unipolarer Strompuls im mA-Bereich entsteht, dem sich eine um mehrere Größenordnungen schwächere, meist im nA-Bereich liegende Komponente überlagert. Diese Komponente wird durch die momentane Feldstärke des rücklaufenden, die erwünschte Messinformation enthaltenden, THz-Pulses erzeugt. Der am Transceiver messbare Strom I setzt sich also aus drei Komponenten zusammen: den beiden durch Anrege- und Abfragepuls hervorgerufenen unipolaren Komponenten $I_S$ und $I_E$ sowie der weitaus schwächeren, durch das einlaufende THz-Feld hervorgerufenen, Komponente $I_{THz}$, die gleichzeitig mit $I_E$ auftritt. Der Strom $I$ kann als Summe der Einzelkomponenten dargestellt werden: $I = I_S + I_E + I_{THz}$. Diese Summenbildung ist zulässig, da nur in einem sehr kurzen Zeitraum von wenigen Pikosekunden nach dem Auftreffen eines Laserpulses (Anrege- oder Abfragepuls) ein Stromfluss möglich ist. Die Anrege- und Abfragepulse sind immer durch eine sehr viel längere Zeitspanne von mehreren zehn Pikosekunden separiert, sodass sich die von ihnen hervorgerufenen Ströme nicht gegenseitig beeinflussen. Der Gesamtstrom $I$ ergibt sich somit direkt aus der Summe der Teilströme, wobei die gleichzeitig auftretenden Komponenten $I_E$ und $I_{THZ}$ von der Komponente $I_S$ zeitlich getrennt sind.

Die zu lösende technische Aufgabe besteht nun darin, die sehr schwache Komponente $I_{THz}$ zuverlässig aus dem mehrere Größenordnungen höheren Gesamtstrom $I$ zu extrahieren.

Diese Aufgabe wird gelöst, indem die Amplituden der Folge der Anregepulse und der Folge der Abfragepulse mit unterschiedlichen Frequenzen moduliert werden. Aus dem Stand der Technik bekannt sind lediglich Verfahren, bei denen eine dieser Pulsfolgen moduliert wird. Die sich aus dem erfindungsgemäßen Verfahren, die Amplituden beider Pulsfolgen mit unterschiedlichen Frequenzen zu modulieren, ergebenden vorteilhaften Analysemöglichkeiten werden im Ergebnis der folgenden Ableitung deutlich, welche die Wirkung des Modulationsverfahrens auf die drei Stromkomponenten quantitativ beschreibt. Der Einfachheit halber wird nachfolgend eine sinusförmige Amplitudenmodulation zugrunde gelegt (harmonische Modulation). Die Ableitung kann aber auf beliebige uni- oder bipolare Modulationsfunktionen (z. B. Rechteck-, Dreieck- und Sägezahn-Modulation) verallgemeinert werden. Diese sind somit ebenfalls für das Modulationsverfahren geeignet.

*Vorgänge an der Antenne des Transceivers*

Der Stromfluss $I$ am Transceiver setzt sich, wie oben dargestellt, aus den Komponenten $I_S$, $I_E$ und $I_{THz}$ zusammen. Mit Ausnahme der sehr kurzen Zeiträume des Einwirkens der Anrege- und Abfragepulse auf den Transceiver ist der elektrische Widerstand der photoleitenden Antenne stets so hoch, dass kein messbarer Stromfluss auftritt. Lediglich während des Auftreffens eines Anrege- oder Abfragepulses wird der Widerstand auf geringe Werte $R_S$ bzw. $R_E$ herabgesetzt, die bei Anliegen einer Bias-Spannung an der Antenne oder einem einlaufenden THz-Feld einen messbaren Stromfluss zulassen. Wie im vorangehenden Abschnitt dargestellt, setzt ein Abfragepuls mit der Leistung $P_{E,0}^{\text{Laser}}$ den

elektrischen Widerstand auf einen Wert $R_E = \dfrac{L_{\text{gap}}^2}{s \cdot \xi \cdot P_{E,0}^{\text{Laser}}}$ herab. Entsprechend setzt ein Anregepuls mit der Leistung

$P_{S,0}^{\mathrm{Laser}}$ den elektrischen Widerstand auf den Wert $R_S = \frac{L_{\mathrm{gap}}^2}{s \cdot \xi \cdot P_{S,0}^{\mathrm{Laser}}}$ herab. An der photoleitenden Antenne des Transceivers liegt permanent die Bias-Spannung $U_0$ an. Bei Auftreffen des Abfragepulses trifft gleichzeitig der (wesentlich längere, die gewünschte Messinformation enthaltende) THz-Puls auf die Antenne, dessen momentane elektrische Feldstärke dort eine zusätzliche Spannung $U_{\mathrm{THz}}$ induziert. Der an der Antenne des Transceivers gemessene totale Photostrom ist somit

$$I = I_S + I_E + I_{\mathrm{THz}} = \frac{U_0}{R_S} + \frac{U_0}{R_E} + \frac{U_{\mathrm{THz}}}{R_E}$$

*Erfindungsgemäßes Modulationsverfahren*

Erfindungsgemäß werden nun die Amplitude und somit die Leistung der Folge der Anregepulse mit einer ersten Modulationsfrequenz $f_S$ und die Amplitude und somit die Leistung der Folge der Abfragepulse mit einer zweiten, davon verschiedenen, Modulationsfrequenz $f_E$ moduliert:

$$P_S^{\mathrm{Laser}} = P_{S,0}^{\mathrm{Laser}} \cdot \sin(2\pi f_S \cdot t),$$

$$P_E^{\mathrm{Laser}} = P_{E,0}^{\mathrm{Laser}} \cdot \sin(2\pi f_E \cdot t).$$

Die Modulationsfrequenzen $f_S$ und $f_E$ müssen kleiner als die Repetitionsrate $f_{\mathrm{rep}}$ des fs-Lasers sein. Wichtig hierbei ist, dass die Frequenzen $f_S$ und $f_E$ nicht durch die Tiefpasscharakteristik der Antenne unterdrückt werden.
Die Modulation der Leistung der Laserpulse bewirkt eine Modulation von $R_S$ und $R_E$ :

$$R_S(t) = \frac{L_{\mathrm{gap}}^2}{s \cdot \xi \cdot P_{S,0}^{\mathrm{Laser}} \cdot \sin(2\pi f_S \cdot t)}$$

$$R_E(t) = \frac{L_{\mathrm{gap}}^2}{s \cdot \xi \cdot P_{E,0}^{\mathrm{Laser}} \cdot \sin(2\pi f_E \cdot t)}$$

Somit überträgt sich die Modulation mit der Modulationsfrequenz $f_S$ auch auf das emittierte THz-Feld $E_{\mathrm{THz}}$. Da sie bei der Reflexion an der Probe erhalten bleibt, weist schließlich auch die durch das an der Probe reflektierte THz-Feld induzierte Spannung $U_{\mathrm{THz}}$ eine Modulation mit $f_S$ auf: $U_{\mathrm{THz}}(t) = U_{\mathrm{THz},0} \cdot \sin(2\pi f_S \cdot t)$.
Das an der Probe reflektierte, die erwünschte spektrale THz-Probeninformation enthaltende, THz-Feld $E_{\mathrm{THz}}$ hat bei Auftreffen auf die Antenne eine Amplitude $E_{\mathrm{THz},0}$ im Bereich von 0,01 V/cm bis 10 V/cm. Bei einer Dipollänge L von typischerweise 10 µm bis 100 µm resultiert daraus ein $U_{\mathrm{THz},0}$ von 10 µV bis 100 mV.
Die an der Antenne messbare Komponente $I_{\mathrm{THz}}$ des Photostroms wird also durch zwei sich überlagernde Modulationsfunktionen bestimmt: Die Modulation von $U_{\mathrm{THz},0}$ erfolgt mit der Frequenz $f_S$, die von $R_E$ dagegen mit der Frequenz $f_E$.
Die Komponente $I_{\mathrm{THz}}$ des Photostroms ist somit wie folgt darstellbar:

$$I_{\text{THz}}(t) = \frac{U_{\text{THz},0} \cdot \sin(2\pi f_S \cdot t)}{R_E(t)} = \frac{s \cdot \xi \cdot P_{E,0}^{\text{Laser}}}{L_{\text{gap}}^2} \cdot U_{\text{THz},0} \cdot \sin(2\pi f_S \cdot t) \cdot \sin(2\pi f_E \cdot t)$$

$$= \frac{s \cdot \xi \cdot P_{E,0}^{\text{Laser}}}{L_{\text{gap}}^2} \cdot \frac{U_{\text{THz},0}}{2} \cdot (\cos(2\pi(f_S - f_E) \cdot t) - \cos(2\pi(f_S + f_E) \cdot t))$$

Die durch die Abfragepulse bedingte Komponente $I_E$ des Photostroms ist

$$I_E(t) = \frac{U_0}{R_E(t)} = \frac{s \cdot \xi \cdot P_{E,0}^{\text{Laser}}}{L_{\text{gap}}^2} \cdot U_0 \cdot \sin(2\pi f_E \cdot t)$$

Entsprechend ist die durch die Anregepulse bedingte Komponente $I_S$ des Photostroms

$$I_S(t) = \frac{U_0}{R_S(t)} = \frac{s \cdot \xi \cdot P_{S,0}^{\text{Laser}}}{L_{\text{gap}}^2} \cdot U_0 \cdot \sin(2\pi f_S \cdot t)$$

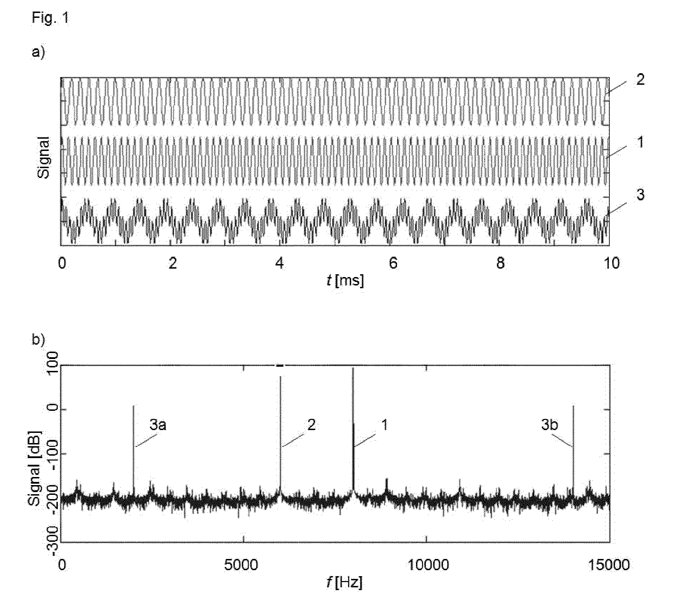

Die Wirkung des erfindungsgemäßen Modulationsverfahrens auf die drei Komponenten des Photostroms $I(t)$ ist nun klar ersichtlich: Auf jede der Komponenten $I_S(t)$ und $I_E(t)$ (Grundströme) wirkt lediglich die zugehörige Modulationsfunktion mit der Frequenz $f_S$ bzw. $f_E$. Sie treten im Frequenzbereich also stets bei den Frequenzen $f_S$ bzw. $f_E$ auf. Die in der Regel extrem schwache Komponente $I_{\text{THz}}(t)$, die das gesuchte THz-Signal enthält, wird dagegen mit einem Produkt beider Modulationsfunktionen moduliert. Dadurch wird $I_{\text{THz}}(t)$ einer Frequenzmischung unterzogen und in zwei Teilkomponenten zerlegt, die bei der Differenzfrequenz $f_S$ - $f_E$ und bei der Summenfrequenz $f_S$ + $f_E$ auftreten. (Es ist ohne Weiteres möglich, die Modulationsfrequenzen so zu wählen, dass $f_E$ > $f_S$ ist. Da die Differenzfrequenz nichtnegativ sein muss, ist in diesem Fall $f_E$ - $f_S$ zu wählen. Eine stets korrekte Angabe für die Differenzfrequenz ist der absolute Betrag $|f_S - f_E|$. Der Einfachheit halber wird nachfolgend jedoch auf die Betragsstriche verzichtet.) Das erfindungsgemäße Modulationsverfahren bewirkt somit eine Separation der das THz-Signal enthaltenden Stromkomponente $I_{\text{THz}}(t)$ von den Komponenten $I_S(t)$ und $I_E(t)$ der Grundströme. Dazu müssen $f_S$ und $f_E$ lediglich so gewählt werden, dass Summen- und Differenzfrequenz einen hinreichend großen Abstand zu den Grundfrequenzen haben, was, wie Fig. 1 zeigt, leicht möglich ist. Da beide Teilkomponenten einen identischen Informationsgehalt aufweisen, genügt es zudem, eine der beiden Teilkomponenten (bei der Differenzfrequenz $f_S$ - $f_E$ oder bei der Summenfrequenz $f_S$ + $f_E$) zu messen, um die gewünschte spektrale THz-Information zu extrahieren. Diese Messung ist mithilfe eines Frequenzfilters, das als schmalbandiges Filter, vorzugsweise als Lock-in-Verstärker, ausgestaltet ist, problemlos ausführbar, indem $f_S$ - $f_E$ oder $f_S$ + $f_E$ als Mittenfrequenz des Filters bzw. als Referenzfrequenz zur Ansteuerung des Lock-in-Verstärkers genutzt werden. Wird die Auswertung auf die Komponente bei der Differenzfrequenz $f_S$ - $f_E$ beschränkt, so ist anstelle des schmalbandigen Filters auch ein Tiefpass mit einer Cut-off-Frequenz oberhalb von $f_S$ - $f_E$, aber unterhalb von $f_S$ und $f_E$ einsetzbar. Die bei der Auswahl von $f_S$ und $f_E$ zu beachtenden Aspekte werden unten noch genauer erläutert.

Die Wirkung des erfindungsgemäßen Modulationsverfahrens veranschaulicht Fig. 1.

Fig. 1 a (Zeitbereich) zeigt ein mit der Modulationsfrequenz $f_S$ moduliertes Sendesignal 1 (enthaltend die Stromkomponente $I_S$), ein mit der Modulationsfrequenz $f_E$ moduliertes Empfangssignal 2 (enthaltend die Stromkomponente $I_E$) und das daraus gewonnene Mischsignal 3, in dem die beiden mittels Frequenzmischung gewonnenen, die Stromkomponente $I_{\text{THz}}$ enthaltenden, Beiträge (ein niederfrequenter Beitrag mit $f_S$ - $f_E$ und ein höherfrequenter Beitrag mit $f_S$ + $f_E$) bereits visuell erkennbar sind.

Fig. 1b zeigt beispielhaft die Positionen der einzelnen Stromkomponenten im Frequenzbereich. Die mit 1 und 2 bezeichneten Komponenten $I_S$ und $I_E$, die mit $f_S$ (hier 8 kHz) und $f_E$ (hier 6 kHz) moduliert sind, treten genau bei diesen Frequenzen auf. Die Komponente $I_{\text{THz}}$ liefert dagegen zwei Beiträge 3a, 3b, die bei der Differenzfrequenz $f_S$ - $f_E$ (hier 2 kHz) und bei der Summenfrequenz $f_S$ + $f_E$ (hier 14 kHz) auftreten und im hier dargestellten Fall ca. 86 dB schwächer als die Komponenten der Grundströme sind.

Hingegen lassen die aus dem Stand der Technik bekannten Modulationsverfahren eine solche Separation des THz-Signals nicht zu. Bei diesen Verfahren wird nur eine Pulsfolge moduliert, z. B. die Folge der Anregepulse mit der Modulationsfrequenz $f_S$. Die zweite Pulsfolge, in diesem Fall also die der Abfragepulse, wird nicht moduliert, ihr kann somit die Modulationsfrequenz $f_E = 0$ zugeordnet werden. Summen- und Differenzfrequenz sind folglich $f_S \pm 0 = f_S$. $I_{THz}$ wird also im Frequenzbereich von der um mehrere Größenordnungen höheren Komponente $I_S$ überlagert und kann daher nicht gemessen werden.

Das neue Modulationsverfahren erlaubt es dagegen, eine sehr kleine Stromkomponente $I_{THz}$ aus zwei weitaus stärkeren Grundströmen $I_S$, $I_E$ zuverlässig zu extrahieren und exakt zu messen. In Verbindung mit diesem Verfahren ist es erstmals möglich, einen Transceiver zu realisieren, bei dem die Modulation nicht im THz-Strahlengang, sondern bereits im optischen Teil des THz-Spektrometers (in den räumlich getrennten optischen Pfaden der Folgen der Anrege- und Abfragepulse, bevor beide Pulsfolgen wieder in einer optischen Faser oder im Freistrahl zusammengeführt werden) erfolgt.

Obwohl die obige Ableitung für den Fall harmonischer Modulationsfunktionen durchgeführt wurde, beschränkt sich das erfindungsgemäße Modulationsverfahren nicht auf harmonische (sinusförmige) Modulationsfunktionen. Vielmehr sind beliebige Modulationsfunktionen einsetzbar. Besonders geeignet sind eine harmonische Modulation mit konstantem Offset sowie eine Modulation mit unipolaren Rechteck-Pulsen. Anwendbar sind aber auch Dreieck- und Sägezahn-Modulation sowie Kombinationen davon und beliebige weitere Formen.

Wichtig ist nicht die Form der Modulationsfunktion, sondern die Wahl geeigneter Frequenzen zur Modulation der beiden Pulsfolgen. Geeignet sind Modulationsfrequenzen $f_S$, $f_E$ zwischen 50 Hz und 50 MHz, bevorzugt liegen sie im Frequenzbereich 100 Hz $\leq f_S$, $f_E \leq 1$ MHz, besonders bevorzugt im Frequenzbereich 1 kHz $\leq f_S$, $f_E \leq 100$ kHz. Die Amplitudenmodulation erfolgt mechanisch oder elektrooptisch, wobei elektrooptisch grundsätzlich höhere Modulationsfrequenzen erreichbar sind. Daher werden bei mechanischer Modulation die Modulationsfrequenzen im unteren Bereich (50 Hz - 2 kHz, bevorzugt 100 Hz - 1 kHz), bei elektrooptischer Modulation hingegen im oberen Bereich (1 kHz - 50 MHz, bevorzugt 10 kHz - 1 MHz) der genannten Intervalle gewählt.

Im Interesse einer hohen Messgeschwindigkeit bei der Abtastung des THz-Pulses (Sampling) sind hohe Modulationsfrequenzen zu bevorzugen. Sie müssen jedoch niedriger als die im Bereich von 100 MHz liegende Repetitionsrate $f_{rep}$ des fs-Lasers bleiben, da an jeder Sampling-Position der Mittelwert aus einer Vielzahl von Einzelmessungen zu bilden ist. Durch den Übergang von der mechanischen Amplitudenmodulation (typische Modulationsfrequenz 1 kHz) zur elektrooptischen Amplitudenmodulation (typische Modulationsfrequenz 100 kHz) kann die Messgeschwindigkeit um einen Faktor im Bereich von 100 gesteigert werden. Werden sehr hohe Modulationsfrequenzen ($f_S$, $f_E \geq 10$ MHz) gewählt, so ist sicherzustellen, dass $f_S$, $f_E$ kleiner als die halbe Repetitionsrate $f_{rep}$ des fs-Lasers sind.

Die Anwendung des neuen Modulationsverfahrens erlaubt es, mit einem Transceiver ausgestattete THz-Sonden in einer extrem kompakten Bauform auszuführen, die bei den aus dem Stand der Technik bekannten THz-Sonden nicht erreichbar ist. Da ein solcher Transceiver nur eine einzige Antenne aufweist, ist er hinsichtlich Kompaktheit und Kostenminimierung auch den aus dem Stand der Technik bekannten Pseudo-Transceivern mit zwei Antennen überlegen.

## Aufbau und Funktionsweise des mit einem Transceiver ausgestatteten THz-Zeitbereichsspektrometers mit 0°-Reflexionsgeometrie zur Anwendung des erfindungsgemäßen Modulationsverfahrens

Das mit einem Transceiver ausgestattete THz-Zeitbereichsspektrometer mit 0°-Reflexionsgeometrie nutzt in seinem optischen Zweig vorzugsweise den bei bekannten THz-Spektrometern üblichen Aufbau, aufweisend einen fs-Laser 11, einen Strahlteiler 12 und eine Verzögerungseinheit 13 mit einem Paar beweglicher Umlenkspiegel 14a, 14b und einem (nicht beweglichen) Umlenkspiegel 14c. Die Funktionsweise dieses Zweigs des Spektrometers, der zwei räumlich separierte Pulsfolgen mit durchstimmbarer zeitlicher Verzögerung liefert, entspricht derjenigen der bereits erläuterten THz-Zeitbereichsspektrometer gemäß dem Stand der Technik. Neben diesem meistverbreiteten Aufbau sind auch beliebige andere aus dem Stand der Technik bekannte Aufbauten zur Gewinnung der beiden Pulsfolgen verwendbar, z. B.

● zwei getrennte Lasersysteme, die die zeitliche Verzögerung zwischen Anrege- und Abfragepuls über eine Frequenzverstimmung der Repetitionsraten erzielen (Asynchronous Optical Sampling, ASOPS),
● ein Lasersystem mit durchstimmbarer Repetitionsrate und einer passiven Verzögerungsstrecke (Optical Sampling by Cavity Tuning, OSCAT),
● ein beliebiges Lasersystem, das definiert gegeneinander verzögerte fs-Laserpulse zur Verfügung stellt.

Die Wellenlänge des fs-Lasers liegt in dem gemäß dem Stand der Technik üblichen Intervall 600 nm - 1600 nm, wobei bevorzugt die Wellenlängen 800 nm, 1064 nm, 1310 nm und 1550 nm und besonders bevorzugt die Wellenlänge 1550 nm verwendet werden. Die Repetitionsrate des fs-Lasers liegt bevorzugt in dem gemäß dem Stand der Technik üblichen Intervall 70 MHz - 250 MHz, es sind jedoch auch Repetitionsraten $f_{rep}$ im erweiterten Intervall 1 kHz - 2 GHz einsetzbar. Sehr kleine Repetitionsraten (ab 1 kHz) sind geeignet bei mechanischer Modulation mit sehr geringen Modulationsfrequenzen ($\leq 100$ Hz), sehr große Repetitionsraten (bis 2 GHz) hingegen bei elektrooptischer Modulation mit sehr hohen Modulationsfrequenzen (≥ 10 MHz). Die Pulsdauern der Anrege- und Abfragepulse liegen zwischen 1 fs und 1 ps, bevorzugt zwischen 30 fs und 100 fs, die Verzögerungszeit liegt zwischen 0 fs und 20 ns, bevorzugt zwischen 50 ps und 500 ps.

Die durch den Strahlteiler aus der Ausgangspulsfolge 21 erzeugten Pulsfolgen (Folge der Anregepulse 21 a, Folge der Abfragepulse 21 b) durchlaufen den optischen Zweig des Spektrometers vollständig im Freistrahl, vollständig in optischen Fasern (vorzugsweise Glasfasern) oder in einer Kombination aus Freistrahl und optischen Fasern. Mithilfe eines geeigneten optischen Bauteils werden beide Pulsfolgen wieder zusammengeführt, was ebenfalls sowohl im Freistrahl als auch in einer optischen Faser erfolgen kann. Auch diese Zusammenführung ist aus der im Stand der Technik zitierten US 6844552B2 bereits bekannt.

Das erfindungsgemäße, mit einem Transceiver ausgestattete THz-Zeitbereichsspektrometer mit 0°-Reflexionsgeometrieunterscheidet sich von den bekannten THz-Spektrometern dadurch, dass es ein Modulationssystem 50 aufweist, das beide Pulsfolgen 21 a und 21 b durchlaufen, bevor sie wieder zusammengeführt werden.

Das Modulationssystem 50 unterzieht beide Pulsfolgen 21 a und 21 b einer Amplitudenmodulation gemäß dem oben beschriebenen Verfahren, wodurch sie in unterschiedlich modulierte Pulsfolgen 21 a' und 21 b' überführt werden, die danach in der oben beschriebenen Weise zusammengeführt werden.

Es ist erforderlich, verschiedene Ausführungsformen von Modulatoren für das Modulationssystem 50 bereitzustellen, die es gestatten, das erfindungsgemäße Modulationsverfahren auf die beiden Pulsfolgen 21 a und 21 b anzuwenden, wenn diese im Freistrahl geführt werden oder es, wenn die beiden Pulsfolgen in getrennten optischen Fasern 62a und 62b geführt werden, als fasergekoppeltes Modulationsverfahren im Bereich dieser Fasern anzuwenden. Die nachfolgende Zusammenführung der modulierten Pulsfolgen 21 a' und 21 b' ist mithilfe eines Strahlteilers (bei Strahlführung im Freistrahl) oder eines faseroptischen Kopplers 63, z. B. eines 3-dB-Kopplers, (bei fasergekoppelter Strahlführung) möglich. Der faseroptische Koppler 63 vereinigt beide Pulsfolgen in einer optischen Faser 62. Wird eine Kombination aus Strahlführung im Freistrahl und fasergekoppelter Strahlführung gewählt, so sind für den Übergang von Freistrahl zu optischer Faser Koppelelemente 61 a und 61 b erforderlich.

Zur Verwendung im Modulationssystem 50 geeignete Modulatoren werden nachfolgend beschrieben. Es sind aus dem Stand der Technik bekannte Modulatoren einsetzbar, die aber, da das erfindungsgemäße Modulationsverfahren zwei verschiedene Modulationsfrequenzen in verschiedenen optischen Pfaden erfordert, entsprechend angepasst werden müssen. Zu diesem Zweck ist es einerseits möglich, einen herkömmlichen Modulator so zu modifizieren, dass er zwei sich um einen geeignet gewählten Faktor unterscheidende Modulationsfrequenzen liefert, oder aber zwei herkömmliche Modulatoren mit einer gemeinsamen Referenzfrequenz anzusteuern, wobei einer der Modulatoren die Referenzfrequenz als Modulationsfrequenz liefert, während der zweite Modulator eine andere Modulationsfrequenz liefert, die erzeugt wird, indem die Referenzfrequenz mit einem geeignet gewählten Faktor multipliziert wird. Entsprechende Ausführungen werden nachfolgend beschrieben.

Mechanische Modulatoren

Mechanische Modulatoren, gemeinhin als Chopper bezeichnet, sind gewöhnlich als scheibenförmige Blenden (Chopperräder) mit äquidistant auf einem Kreisring angeordneten Öffnungen (Slots) ausgeführt. Handelsübliche Chopper weisen zumeist mehrere wechselbare Chopperräder mit unterschiedlicher Anzahl von Slots auf, die mit einstellbaren Frequenzen von wenigen Hz bis zu ca. 100 Hz zur Rotation gebracht werden. Z.B. verfügt der Chopper 218M der Firma Bentham über vier wechselbare Chopperräder mit 2, 5, 10 sowie 30 Slots und erlaubt es, einen auf ein rotierendes Chopperrad auftreffenden Freistrahl mit Frequenzen zwischen 2,5 Hz und 3 kHz zu modulieren. Dieser Chopper kann jedoch zu einem bestimmten Zeitpunkt nur eine einzige Modulationsfrequenz liefern.

Zur Durchführung des erfindungsgemäßen Modulationsverfahrens ist es möglich, im Modulationssystem 50 zwei separate Chopper zu kombinieren, um die Folgen der Anrege- und Abfragepulse mit unterschiedlichen Modulationsfrequenzen zu modulieren. Eine solche Anordnung erlaubt die unabhängige Einstellung beider Modulationsfrequenzen, erfordert aber auch eine aufwendige Steuerung, was aus Kostengründen nachteilig ist.

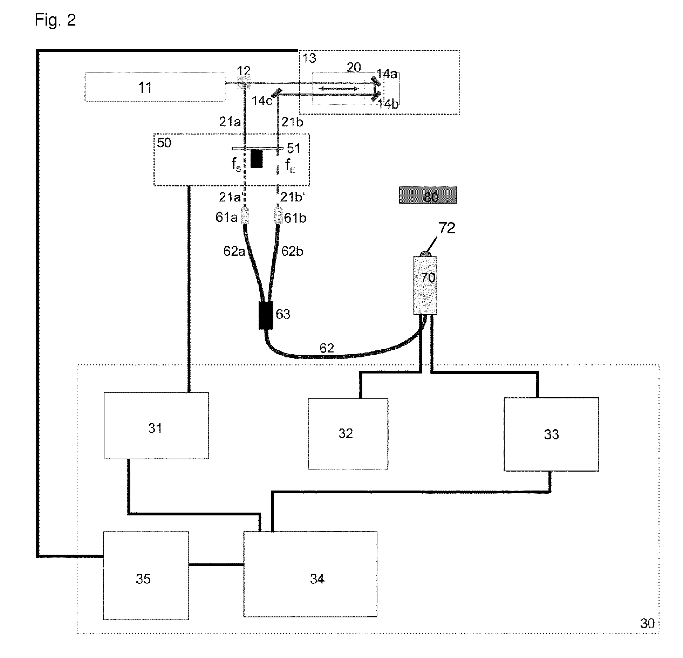

Da das erfindungsgemäße Modulationsverfahren eine unabhängige Einstellung der beiden Modulationsfrequenzen nicht erfordert, wird das Modulationssystem 50 bevorzugt mit nur einem mechanischen Modulator ausgeführt, der zwei Modulationsfunktionen mit unterschiedlichen Modulationsfrequenzen liefert, die in einem geeigneten, fest eingestellten Verhältnis $f_S/f_E$ stehen. Das ist z. B. durch ein entsprechend ausgestaltetes Chopperrad 51 erreichbar, wie es das in Fig. 2 enthaltene Modulationssystem 50 aufweist. Das Chopperrad 51 hat zwei konzentrische Kreisringe mit einer unterschiedlichen Anzahl von Slots, die dem gewünschten Verhältnis $f_S/f_E$ entspricht. Ein Verhältnis $f_S/f_E$ = 1,5 ist beispielsweise realisierbar, indem der äußere Kreisring mit 30 Slots und der innere Kreisring mit 20 Slots versehen werden und die Folge der Anregepulse auf den äußeren Kreisring, die Folge der Abfragepulse auf den inneren Kreisring trifft. Die von einem solchen Chopperrad gelieferten Modulationsfunktionen sind somit phasenstarr gekoppelt.

Die Form der Modulationsfunktionen hängt von der Strahlformung der auftreffenden Lichtstrahlen ab. Sind die auftreffenden Laserstrahlen auf einen Punkt in der Chopperebene fokussiert, so werden sie durch den Chopper abrupt ein- und ausgeschaltet, sodass eine Rechteckmodulation resultiert. Verlaufen sie hingegen als kollimierte Laserstrahlen mit einem Strahldurchmesser von wenigen Millimetern durch die Chopperebene, so können auch Modulationsfunktionen mit Trapez- oder Dreieck-Verlauf sowie auch (annähernd) harmonische Modulationsfunktionen mit konstantem Offset realisiert werden. Die Auswahl des Chopperrads und die Einstellung seiner Rotationsfrequenz (und damit der Modulationsfrequenzen) erfolgt mithilfe eines Modulator-Controllers, der Teil der Mess- und Steuerelektronik des erfindungsgemäßen Spektrometers ist.

Es ist offensichtlich, dass mechanische Modulatoren wie Chopper nur im Freistrahlbereich einsetzbar sind.

Elektrooptische Modulatoren

Eine Alternative zu mechanischen Modulatoren sind elektrooptische Modulatoren. Sie können sowohl im Freistrahl als auch integriert in optische Fasern eingesetzt werden und lassen weitaus höhere Modulationsfrequenzen zu.

Bei dem erfindungsgemäßen Spektrometer ist ein Modulationssystem 50 mit elektrooptischen Modulatoren im Freistrahl (an der Position des Chopperrads 51) oder aber als fasergekoppeltes Modulationssystem im Abschnitt der Anschlussfasern 62a und 62b des faseroptischen Kopplers einsetzbar.

Ausführbar ist ein solches Modulationssystem z. B. in Form von zwei elektrooptischen Schaltern, die als diskrete Baugruppen in den Freistrahlbereichen der beiden Pulsfolgen (Folgen der Anrege- und Abfragepulse) angeordnet sind oder aber, in einer bevorzugten Ausgestaltung, als fasergekoppelte elektrooptische Schalter in die beiden Anschlussfasern des faseroptischen Kopplers integriert sind. Als elektrooptische Schalter werden geeignete VOAs (Variable Optical Attenuators) verwendet, die Schaltzeiten bis hinunter zu wenigen Nanosekunden zulassen. Die benötigten Modulationsfrequenzen, die bei maximal 50 MHz liegen, sind also bequem erreichbar.

Wie ein mechanisches ist auch ein elektrooptisches Modulationssystem mit einem Modulator-Controller verbunden, mit dessen Hilfe die beiden elektrooptischen Schalter auf unterschiedliche Modulationsfrequenzen und -funktionen eingestellt werden, die dann die beiden das Modulationssystem durchlaufenden Pulsfolgen unterschiedlich modulieren.

Es ist auch möglich, das Modulationssystem so auszuführen, dass ein mechanischer Modulator zur Modulation einer der beiden Pulsfolgen und ein elektrooptischer Modulator zur Modulation der anderen Pulsfolge eingesetzt wird.

Faseroptische Ankopplung des Transceivers

Der Ausgang des faseroptischen Kopplers 63 ist mit dem Transceiver 70 über eine optische Faser 62 verbunden, welche die vereinigten Pulsfolgen 21 a' und 21 b' auf den photoleitenden Anregungsort der Antenne des Transceivers leitet. Die Ankopplung über eine flexible optische Faser und die sehr kompakt, klein und leicht gestaltete Sonde ermöglichen es, die Sonde nahezu freibeweglich auszuführen. Insbesondere sind Messungen in schwer zugänglichen Hohlräumen, z. B. bei der Endkontrolle industrieller Produkte oder bei endoskopischen Untersuchungen in der Medizin problemlos möglich. Besonders vorteilhaft ist das Fehlen jeglicher Baugruppen zwischen dem Transceiver 70 und der zu untersuchenden Probe 80, sodass der Transceiver der zu untersuchenden Probe beliebig anzunähern oder sogar in direkten Kontakt mit dieser zu bringen ist. Diese Möglichkeit verdeutlicht Fig. 2, in der der Transceiver 70 in einer verkapselten Form (Sonde) mit einer halbkugelförmigen THz-Linse 72 dargestellt ist. Die in der Sonde untergebrachte miniaturisierte photoleitende Antenne ist in Fig. 2 nicht erkennbar. Die geringe Entfernung zwischen Transceiver und Probe ermöglicht es, die erforderliche Sende- und Empfangsleistung zu verringern. Ferner werden unerwünschte Einflüsse durch die atmosphärische Absorption im THz-Strahlengang verringert oder völlig eliminiert.

Wie erwähnt ist es auch möglich, die Pulsfolgen im Freistrahl zu führen und mittels geeigneter optischer Elemente (Umlenkspiegel) in den Transceiver einzukoppeln. Jedoch ist diese Variante wesentlich aufwendiger als die fasergekoppelte Lösung.

Aufbau und Wirkungsweise des Transceivers

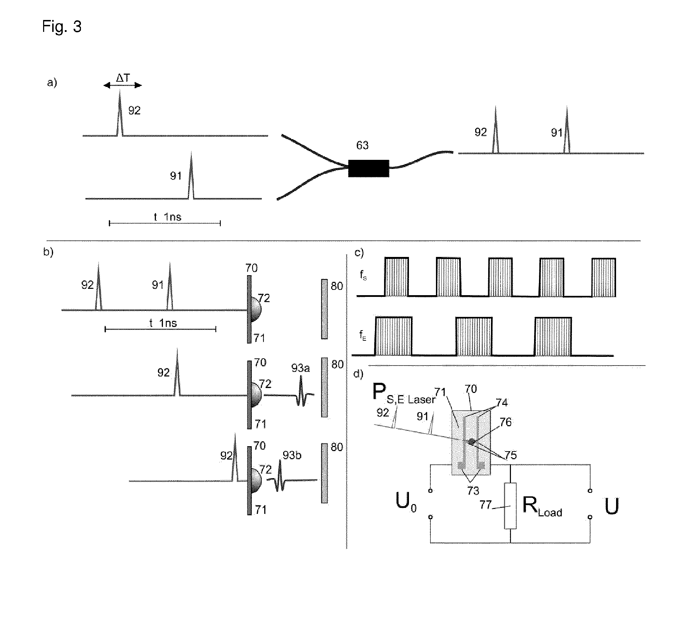

Fig. 3 veranschaulicht anhand schematischer Darstellungen Aufbau und Wirkungsweise des Transceivers.

Fig. 3a zeigt, wie zwei Einzelpulse, ein Anregepuls 91 aus der Folge 21a' der modulierten Anregepulse und ein Abfragepuls 92 aus der Folge der modulierten Abfragepulse 21 b', mithilfe eines faseroptischen Kopplers 63 zu einem Pulspaar mit einer Verzögerungszeit im Pikosekundenbereich (hier ca. 600 ps) zusammengeführt werden. Gemäß der Repetitionsrate $f_{rep}$ des fs-Lasers 11, die typischerweise 100 MHz beträgt, ist dieses Pulspaar vom nächstfolgenden Pulspaar durch eine wesentlich längere Zeitspanne von typischerweise 10 ns getrennt.

Fig. 3b zeigt die Vorgänge beim Auftreffen des Pulspaars auf die photoleitende Antenne des Transceivers 70, der ohne Verkapselung dargestellt ist. Die photoleitende Antenne ist in Fig. 3b in Seitenansicht dargestellt, sodass lediglich das Halbleitersubstrat 71, vorzugsweise low-temperature-grown GaAs, und die THz-Linse 72 erkennbar sind. Die weiteren Komponenten der photoleitenden Antenne sind in der Draufsicht in Fig. 3d erkennbar: Auf dem Halbleitersubstrat 71 befinden sich die Antennenkontakte 73, die mit zwei Streifenleitern 74, deren Abstand die Dipollänge L bestimmt, verbunden sind. In der Mitte der Streifenleiter 74 befinden sich die Antennenspitzen 75, die den Abstand $L_{gap}$ aufspannen. Antennenkontakte 73,

Streifenleiter 74 und Antennenspitzen 75 sind metallisch ausgeführt, vorzugsweise aus Kupfer, Silber oder Gold. Zwischen den Antennenspitzen 75 mit dem Abstand $L_{gap}$ befindet sich der photoleitende Anregungsort 76 der Antenne.

Die Abmessung der Antenne wird im Wesentlichen durch die Länge und den Abstand der Streifenleiter (Dipollänge L) bestimmt, die typischerweise $\leq 4$ mm und $\leq 500$ $\mu$m sind. Die Antenne kann somit auf einem Substrat untergebracht werden, dessen diagonale Abmessung unterhalb von 5 mm liegt. Da der Transceiver nur eine einzige Antenne aufweist, ist er somit in miniaturisierter Form als Sonde mit rechteckigem Querschnitt (Kantenlängen $\leq 5$ mm) oder kreisförmigem Querschnitt (Durchmesser $\leq 5$ mm) ausführbar. Der kreisförmige Querschnitt ist für bestimmte Anwendungen, insb. die Endoskopie, besonders vorteilhaft (geringe Verletzungsgefahr), es sind aber natürlich beliebig geformte Querschnitte, z. B. Quadrat, Vieleck, Oval, möglich. Die Höhe der Sonde ist vorzugsweise $\leq 8$ mm. Selbstverständlich kann die Sonde auch mit größeren Abmessungen ausgeführt werden.

Trifft, wie in Fig. 3b gezeigt, der Anregepuls 91 (mit der Leistung $P_S^{\mathrm{Laser}}$) auf den photoleitenden Anregungsort 76, so wird die Antenne kurzzeitig leitend geschaltet, der durch die Bias-Spannung $U_0$ aufgeladene Kondensator C wird durch den Photostrom $I_S$ abrupt entladen und ein Teil der in C elektrostatisch gespeicherten Energie in einen auslaufenden THz-Puls 93a überführt, der durch die THz-Linse 72 auf die fixierte Probe 80 gelenkt wird, wo er unter Aufnahme der spektralen THz-Probeninformation reflektiert wird. Der reflektierte THz-Puls 93b läuft zurück zum Transceiver 70 und wird durch die THz-Linse 72 auf den photoleitenden Anregungsort 76 fokussiert. Die Pulsdauer des auslaufenden THz-Pulses 93a ist um ca. 2 Größenordnungen höher als die Pulsdauer des ihn erzeugenden Anregepulses 91. Ebenso ist die Pulsdauer des reflektierten, die spektrale THz-Probeninformation enthaltenden, THz-Pulses 93b ca. 2 Größenordnungen höher als die Pulsdauer des Abfragepulses 92.

Trifft nun während des Einlaufens des reflektierten THz-Pulses 93b der zeitlich verzögerte Abfragepuls 92 (mit der Leistung $P_E^{\mathrm{Laser}}$) auf den photoleitenden Anregungsort 76, so wird die Antenne erneut für eine sehr kurze Zeitdauer (wesentlich kürzer als die Dauer des einlaufenden THz-Pulses) leitend geschaltet, der durch die Bias-Spannung $U_0$ bereits wiederaufgeladene Kondensator C wird erneut entladen, sodass ein kurzzeitiger Stromfluss $I_E$ im mA-Bereich entsteht, dem sich eine schwache, durch den Momentanwert THz-Feldes am photoleitenden Anregungsort 76 erzeugte, Komponente $I_{THZ}$ im nA-Bereich überlagert. Durch eine Vielzahl von Einzelmessungen, bei denen die Verzögerungszeit der Pulse 91 und 92 eines Pulspaars im Pikosekundenbereich (typischerweise über einen Bereich von 20 ps bei einer Schrittweite von 100 fs, die in Bereichen starker Änderung des THz-Feldes noch verkleinert wird) durchgestimmt wird, wird die Wellenform des THz-Pulses aus einer Vielzahl von Momentanwerten zusammengesetzt (Sampling).

Das Problem der Überlagerung der schwachen, durch das THz-Signal bedingten Stromkomponente durch einen mehrere Größenordnungen höheren Grundstrom wird durch das erfindungsgemäße Modulationsverfahren gelöst. Fig. 3c zeigt schematisch zwei besonders geeignete unipolare Rechteck-Modulationsfunktionen mit den Modulationsfrequenzen $f_S$ und $f_E$. Fig. 3d zeigt schematisch, wie der Stromfluss $I$ an der photoleitenden Antenne eine dazu proportionale Spannung U erzeugt, die mithilfe eines Lastwiderstands $R_{load}$ gemessen wird.

Die elektronische Ankopplung des Transceivers wird im folgenden Abschnitt beschrieben.

Mess- und Steuerelektronik

Die in Fig. 2 schematisch dargestellte Mess- und Steuerelektronik 30 des THz-Spektrometers umfasst neben dem schon erwähnten Modulator-Controller 31 eine Spannungsquelle 32 zur Versorgung der photoleitenden Antenne des Transceivers mit einer konstanten Bias-Spannung, einen Transimpedanz-Verstärker 33 zur Umwandlung des am Transceiver gemessenen Stromsignals $I$ in ein dazu proportionales Spannungssignal U, ein Frequenzfilter 34, hier ausgeführt als Lock-in-Verstärker, der durch den Modulator-Controller 31 mit einer Referenzfrequenz

(wahlweise der Differenzfrequenz $f_S - f_E$ oder der Summenfrequenz $f_S + f_E$) angesteuert wird und aus dem Spannungssignal U das erwünschte THz-Signal $U_{THz}$ extrahiert, sowie einen Steuer-, Mess- und Auswerterechner 35, der die Verzögerungseinheit steuert und das gewünschte, mittels Abtastung (Sampling) im Zeitbereich gemessene, THz-Signal weiterverarbeitet.

Wird statt des (als extrem schmalbandiges Filter wirkenden) Lock-in-Verstärkers ein einfaches schmalbandiges Filter gewählt, so ist dessen Mittenfrequenz wahlweise auf die Differenzfrequenz $f_S - f_E$ oder die Summenfrequenz $f_S + f_E$ einzustellen. Wird die Auswertung auf die Komponente bei der Differenzfrequenz $f_S - f_E$ beschränkt, so ist anstelle des schmalbandigen Filters auch ein Tiefpass einsetzbar, dessen Cut-off-Frequenz oberhalb der Differenzfrequenz $f_S$ - $f_E$, aber unterhalb der Frequenzen $f_S$ und $f_E$ liegt.

**Bezugszeichenliste**

| | |
|---|---|
| 1 | - Sendesignal im Zeitbereich und Frequenzbereich |
| 2 | - Empfangssignal im Zeitbereich und Frequenzbereich |
| 3 | - Mischsignal im Zeitbereich |
| 3a | - Mischsignal im Frequenzbereich: Komponente bei der Differenzfrequenz |
| 3b | - Mischsignal im Frequenzbereich: Komponente bei der Summenfrequenz |
| | |
| 11 | - fs-Laser |
| 12 | - Strahlteiler |
| 13 | - Verzögerungseinheit |
| 14a,b | - Paar beweglicher Umlenkspiegel |
| 14c | - Umlenkspiegel |
| | |
| 21 | - Laserstrahl mit Ausgangspulsfolge |
| 21a | - Teilstrahl mit Folge der Anregepulse |
| 21a' | - Teilstrahl mit Folge der Anregepulse, moduliert |
| 21b | - Teilstrahl mit Folge der Abfragepulse |
| 21b' | - Teilstrahl mit Folge der Abfragepulse, moduliert |
| | |
| 30 | - Messelektronik und Steuerung |
| 31 | - Modulator-Controller |
| 32 | - Spannungsquelle für Bias-Gleichspannung |
| 33 | - Transimpedanz-Verstärker |
| 34 | - Frequenzfilter |
| 35 | - Steuer-, Mess- und Auswerterechner |
| | |
| 50 | - Modulationssystem |
| 51 | - Chopperrad |
| | |
| 61a,b | - Elemente zur Einkopplung der Teilstrahlen in die optischen Fasern |
| 62a | - optische Faser zum Transport der Folge der Anregepulse |
| 62b | - optische Faser zum Transport der Folge der Abfragepulse |
| 62 | - optische Faser zum Transport der zusammengeführten Folgen der Anrege- und Abfragepulse |
| 63 | - faseroptischer Koppler (3-dB-Koppler) |
| | |
| 70 | - Transceiver |
| 71 | - Halbleitersubstrat |
| 72 | - THz-Linse |
| 73 | - Antennenkontakte |
| 74 | - Streifenleiter |
| 75 | - Antennenspitzen |
| 76 | - photoleitender Anregungsort |
| 77 | - Lastwiderstand $R_{load}$ |
| 80 | - zu untersuchende Probe mit Fixierung |
| | |
| 91 | - ein einzelner Anregepuls |
| 92 | - ein einzelner Abfragepuls |
| 93a | - vom Transceiver emittierter THz-Puls |
| 93b | - an der Probe reflektierter THz-Puls |

**Abbildungslegenden**

Es zeigen:

Fig. 1 a) im Zeitbereich: ein mit der Modulationsfrequenz $f_S$ moduliertes Sendesignal 1, ein mit der Modulationsfrequenz $f_E$ moduliertes Empfangssignal 2 und das daraus gewonnene Mischsignal 3,

b) im Frequenzbereich: die Lage und Amplitude des Sendesignals 1 und des Empfangssignals 2 sowie die Lage und Amplitude der beiden Komponenten 3a und 3b des Mischsignals,

Fig. 2: das Schema eines zur Anwendung des erfindungsgemäßen Modulationsverfahrens geeigneten mit einem Transceiver ausgestatteten THz-Zeitbereichsspektrometers mit 0°-Reflexionsgeometrie,

Fig. 3 a) eine schematische Darstellung des Zusammenführens von Anrege- und Abfragepuls mithilfe eines faseroptischen Kopplers,

b) eine schematische Darstellung der Vorgänge an der Antenne beim Auftreffen von Anrege- und Abfragepuls,

c) die Kombination zweier besonders geeigneter Modulationsfunktionen mit unipolaren Rechteckpulsen,

d) das Prinzip der elektrischen Beschaltung der photoleitenden Antenne.


**Patentansprüche**

1. Verfahren zur Signalanalyse für die THz-Zeitbereichsspektroskopie, beinhaltend die Erzeugung einer Folge von Anregepulsen (91) und einer Folge von Abfragepulsen (92) mit definierter, durchstimmbarer Verzögerungszeit $\Delta t$, wobei die Folge der Anregepulse (91) eine Folge von THz-Pulsen (93a) hervorruft, die auf eine zu analysierende Probe (80) gelenkt und von dieser unter Aufnahme einer spektralen THz-Probeninformation reflektiert werden, und die Wellenform der reflektierten THz-Pulse (93b) mit der aufgenommenen spektralen THz-Probeninformation durch die Folge der zeitlich verzögerten Abfragepulse (92) mithilfe eines Abtastverfahrens (Sampling) punktweise im Zeitbereich aufgezeichnet wird, **dadurch gekennzeichnet, dass** die Folge der Anregepulse (91) einer Amplitudenmodulation mit einer Modulationsfunktion, die eine erste Modulationsfrequenz $f_S$ aufweist, unterzogen wird, die sich auf die Folge der THz-Pulse (93a, 93b) überträgt, und die Folge der Abfragepulse (92) einer Amplitudenmodulation mit einer Modulationsfunktion, die eine zweite, davon verschiedene, Modulationsfrequenz $f_E$ aufweist, unterzogen wird und die spektrale THz-Probeninformation bei mindestens einer der Mischfrequenzen $|f_S - f_E|$ und $f_S + f_E$ aus der Wellenform des THz-Pulses (93b) im Zeitbereich extrahiert wird.

2. Verfahren nach Anspruch 1, **dadurch gekennzeichnet, dass** die Modulationsfrequenzen $f_S$ und $f_E$ im Frequenzbereich 50 Hz $\leq f_S$, $f_E \leq$ 50 MHz, bevorzugt im Frequenzbereich 1 kHz $\leq f_S$, $f_E \leq$ 100 kHz, liegen.

3. Modulationssystem (50) zur Realisierung der Amplitudenmodulation nach Anspruch 1, **dadurch gekennzeichnet, dass** es zwei miteinander gekoppelte Modulatoren aufweist, die mit unterschiedlichen Modulationsfrequenzen $f_S$ und $f_E$ betreibbar sind, wobei der erste Modulator im optischen Pfad (21 a, 62a) der Anregepulse und der zweite Modulator im optischen Pfad der Abfragepulse (21 b, 62b) angeordnet sind.

4. Modulationssystem (50) nach Anspruch 3, **dadurch gekennzeichnet, dass** die Modulatoren als im Freistrahl angeordnete mechanische oder elektrooptische Modulatoren oder als fasergekoppelte elektrooptische Modulatoren ausgeführt sind.

5. Modulationssystem nach einem der Ansprüche 3 und 4, **dadurch gekennzeichnet, dass** als mechanische Modulatoren ein Chopperrad (51), das zwei Modulatoren in phasenstarrer Kopplung aufweist, oder zwei gekoppelte Chopperräder, als elektrooptische Modulatoren geeignete Variable Optical Attenuators (VOA) eingesetzt werden.

6. THz-Zeitbereichsspektrometer mit 0°-Reflexionsgeometrie, aufweisend eine laserbasierte Anordnung zur Erzeugung einer Folge von Anregepulsen und einer Folge von Abfragepulsen, wobei jedem Anregepuls (91) ein Abfragepuls (92) mit einer durch eine Verzögerungseinheit (13) definiert einstellbaren, durchstimmbaren Verzögerungszeit $\Delta t$ zugeordnet ist, Mittel zur Führung und Vereinigung beider Pulsfolgen in einer optischen Faser oder im Freistrahl, eine Vorrichtung zur Fixierung einer Probe (80), eine zur Emission und Detektion von THz-Pulsen (93a, 93b) geeignete Antenneneinheit, einen Transimpedanz-Verstärker (33) zur Umwandlung eines von der Antenneneinheit gelieferten Stromsignals in ein dazu proportionales Spannungssignal, ein Frequenzfilter (34) zur Extraktion der spektralen THz-Probeninformation nach Anspruch 1 und einen Steuer-, Mess- und Auswerterechner (35) zu deren weiterer Verarbeitung, die notwendigen Verbindungen und Vorrichtungen zur Formung, Lenkung und zum Transport der optischen, elektrischen und THz-Signale, **dadurch gekennzeichnet, dass** es ein Modulationssystem (50) nach Anspruch 3 bis 5 zur Amplitudenmodulation nach Anspruch 1 und einen Modulator-Controller (31) zur Einstellung der Modulationsfrequenzen $f_S$ und $f_E$ und zur Bestimmung einer Mischfrequenz nach Anspruch 1 aufweist und dass die Antenneneinheit als Transceiver (70) mit nur einer, permanent mit einer durch die Spannungsquelle 32 erzeugten Bias-Gleichspannung $U_0$ beaufschlagten, photoleitenden Antenne, die sowohl als Sender als auch als Empfänger von THz-Strahlung geeignet ist, ausgeführt ist.

7. THz-Zeitbereichsspektrometer nach Anspruch 6, **dadurch gekennzeichnet, dass** die als Transceiver (70) mit nur einer photoleitenden Antenne ausgeführte Antenneneinheit als miniaturisierte Antenneneinheit in einer Sonde mit einem Volumen kleiner/gleich 5 mm x 5 mm x 8 mm unterbringbar ist, die einen rechteckigen Querschnitt mit Seitenlängen $\leq$ 5mm oder einen kreisförmigen Querschnitt mit einem Durchmesser $\leq$ 5 mm und eine Höhe $\leq$ 8 mm aufweist.

8. THz-Zeitbereichsspektrometer nach einem der Ansprüche 6 und 7, **dadurch gekennzeichnet, dass** es auf folgende Parameterbereiche eingestellt ist:

   Wellenlänge des fs-Lasers: 600 nm - 1600 nm, wobei bevorzugt die Wellenlängen 800 nm, 1064 nm, 1310 nm und 1550 nm und besonders bevorzugt die Wellenlänge 1550 nm verwendet werden,
   Repetitionsrate des fs-Lasers: 1 kHz - 2 GHz, bevorzugt 70 MHz - 250 MHz,
   Pulsdauer der Anrege- und Abfragepulse: 1 fs - 1 ps, bevorzugt 30 fs -100 fs,
   Verzögerungszeit: 0 fs - 20 ns, bevorzugt 50 ps - 500 ps.

9. THz-Zeitbereichsspektrometer nach einem der Ansprüche 6 bis 8, **dadurch gekennzeichnet, dass** die laserbasierte Anordnung zur Erzeugung einer Folge von Anregepulsen und einer Folge von zeitlich verzögerten Abfragepulsen alle geeigneten, aus dem Stand der Technik bekannten, Ausführungsformen aufweisen kann, umfassend:

   a. einen fs-Laser (11) zur Generation einer Folge von fs-Laserpulsen, einen Strahlteiler (12) zur Spaltung der fs-Laserpulse in Anrege- und Abfragepulse, die über verschiedene optische Pfade geleitet werden, wobei einer der optischen Pfade eine Verzögerungseinheit (13) zur Herstellung einer durchstimmbaren zeitlichen Verzögerung jedes Abfragepulses (92) gegenüber dem zugehörigen Anregepuls (91) aufweist,
   b. zwei getrennte Lasersysteme, die die zeitliche Verzögerung zwischen Anrege- und Abfragepuls über eine Frequenzverstimmung der Repetitionsraten erzielen (ASOPS),
   c. ein Lasersystem mit durchstimmbarer Repetitionsrate und einer passiven Verzögerungsstrecke (OSCAT),
   d. ein beliebiges Lasersystem, das definiert gegeneinander verzögerte fs-Laserpulse zur Verfügung stellt.

10. THz-Zeitbereichsspektrometer nach einem der Ansprüche 6 bis 9, **dadurch gekennzeichnet, dass** das Frequenzfilter (34) als schmalbandiges Filter ausgeführt ist, das auf eine der Mischfrequenzen nach Anspruch 1 eingestellt ist.

11. THz-Zeitbereichsspektrometer nach Anspruch 10, **dadurch gekennzeichnet, dass** das schmalbandige Filter als Lock-in-Verstärker ausgeführt ist, der mit einer Mischfrequenz nach Anspruch 1 als Referenzfrequenz angesteuert wird.

12. THz-Zeitbereichsspektrometer nach Anspruch 10, **dadurch gekennzeichnet, dass** das Frequenzfilter (34) als Tiefpass ausgeführt ist, dessen Cut-off-Frequenz oberhalb der Differenzfrequenz $|f_S - f_E|$ liegt und unterhalb der Frequenzen $f_S$ und $f_E$ liegt.

13. Verwendung des Verfahrens zur Signalanalyse nach einem der Ansprüche 1 und 2 und des mit einem Modulationssystem (50) nach einem der Ansprüche 3 bis 5 ausgestatteten THz-Zeitbereichsspektrometers nach einem der Ansprüche 6 bis 12 für die Extraktion eines THz-Signals im Zeitbereich aus einem mehrere Größenordnungen höheren Grundsignal.

Fig. 1

a)

b)

Fig. 2

Fig. 3

Europäisches
Patentamt

European
Patent Office

Office européen
des brevets

**EUROPÄISCHER RECHERCHENBERICHT**

Nummer der Anmeldung

EP 13 16 7488

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Krzysztof Iwaszczuk ET AL: "Simultaneous reference and differential waveform acquisition in time-resolved terahertz spectroscopy "", Optics Express, Vol 17, No. 24, 23. November 2009 (2009-11-23), Seiten 21969-21976, XP055084589, Gefunden im Internet: URL:http://www.opticsinfobase.org/DirectPD FAccess/85467996-E8AB-B5C7-14DAAE95DDAF0CD 4_189401/oe-17-24-21969.pdf?da=1&id=189401 &seq=0&mobile=no [gefunden am 2013-10-21] * Seite 21970 - Seite 21971; Abbildungen 1a, b * ----- | 3-5 | INV. G01J3/42 G01J3/433 G01J3/02 |
| A | US 6 573 737 B1 (LYON STEPHEN A [US] ET AL) 3. Juni 2003 (2003-06-03) * Zusammenfassung; Abbildungen 1a, b * ----- | 1-13 | |
| A | US 2009/206263 A1 (RAHMAN ANIS [US]) 20. August 2009 (2009-08-20) * Absatz [0063]; Abbildung 2 * ----- | 1-13 | RECHERCHIERTE SACHGEBIETE (IPC) |
| A | WO 01/77646 A1 (RENSSELAER POLYTECH INST [US]) 18. Oktober 2001 (2001-10-18) * Zusammenfassung; Abbildung 1 * ----- | 1-13 | G01J G01N H01Q |

Der vorliegende Recherchenbericht wurde für alle Patentansprüche erstellt

| Recherchenort | Abschlußdatum der Recherche | Prüfer |
|---|---|---|
| München | 21. Oktober 2013 | Schmidt, Charlotte |

**ANHANG ZUM EUROPÄISCHEN RECHERCHENBERICHT
ÜBER DIE EUROPÄISCHE PATENTANMELDUNG NR.**

EP 13 16 7488

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-2013

| Im Recherchenbericht angeführtes Patentdokument | Datum der Veröffentlichung | Mitglied(er) der Patentfamilie | Datum der Veröffentlichung |
|---|---|---|---|
| US 6573737 B1 | 03-06-2003 | KEINE | |
| US 2009206263 A1 | 20-08-2009 | KEINE | |
| WO 0177646 A1 | 18-10-2001 | CA 2404434 A1<br>EP 1281061 A1<br>JP 2004500582 A<br>US 2001038074 A1<br>WO 0177646 A1 | 18-10-2001<br>05-02-2003<br>08-01-2004<br>08-11-2001<br>18-10-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6844552 B2, Zhang

**In der Beschreibung aufgeführte Nicht-Patentliteratur**

- **Y. B. JI et al.** *Optics Express,* 2009, vol. 17, 17082

- **JEPSEN, P. U. ; JACOBSEN, R. H. ; KEIDING, S. R.** Generation and detection of terahertz pulses from biased semiconductor antennas. *Journal of the Optical Society of America B,* 1996, vol. 13 (11), 2424